# EUROPEAN PATENT APPLICATION

(11) **EP 1 174 648 A2**
(43) Date of publication of application: **23.01.2002**
(21) Application number: 01202721.5
(22) Date of filing: 17.07.2001
(51) Int. Cl.: F16K 1/226, F16K 27/02

(54) **Butterfly valve**

(30) Priority: 20.07.2000 IT PT000008
(71) Applicant: Lardieri, Salvatore, 55010 Spianate-Altopascio (LU) (IT)
(72) Inventor: Lardieri, Salvatore, 55010 Spianate-Altopascio (LU) (IT)
(74) Representative: Fiammenghi-Domenighetti, Delfina

(57) **Abstract**

This is a butterfly valve for distributing various materials, including among others powders and liquids, used in the pharmaceutical, food and suchlike field, in which arrangements are employed to ensure durable and complete leaktightness, in such a way that contamination is prevented between internal parts of the valve and between internal parts and the external environment.
The arrangements consist of:
a) frustoconical coupling between the control spindle (5) and the disc (2), in order to ensure durable and complete leaktightness of the disc in the closed position, and with irregular cross section in order to ensure the correct position of the actuating lever (6);
b) spindle-disc coupling where the contact surfaces are embedded in the rubbery seal (3) of the valve, thus preventing potential contamination between the valve interior and the external environment;
c) flange for connection to the external machinery with projection that presses against the seal, thus preventing potential contamination via the contact surface between flange and valve body.

## Description

The present invention relates in general to valves for distributing various materials, including powders and liquids, used in the pharmaceutical, food or suchlike field, and in particular valves constructed with a one-piece body that are easily removed to allow the necessary and frequent operation of cleaning to ensure the continuation of the sterile conditions required for the processing of such products, the distribution device being constructed with a disc, or butterfly, rotatable through 90° and capable of being moved from a horizontal closed position to a vertical open position by the external actuation of a spindle connected to the disc, from which it is separable; disc leaktightness being ensured in the closed position by a seal made of a rubbery material.

In view of the areas in which it is used, great care must, as is known, be applied to the problem of contamination, which must at all costs be avoided, and can occur between the following environments:
1) between upper part and lower part, inside the valve, due to imperfect leaktightness of the disc;
2) between outer part and inner part of the valve at the spindle-disc connection;
3) between the valve and the connections to machinery located upstream and downstream of the said valve.

In valves currently available on the market, the end of the control spindle, where it connects to the disc, is of prismatic shape with a generally square cross section and there is therefore no possibility of compensating for the inevitable wear of the surfaces in contact, leading to shear stresses between them. This configuration furthermore does not ensure that the position of the control lever corresponds to that adopted by the disc at the moment of assembly.

Also, the seal between the valve interior and the external environment presents problems in valves that are currently available on the market, especially if the product being processed is liquid or powder, both at the spindle-disc connection and with reference to the coupling of the valve to machinery connected upstream and downstream thereof, owing to sealing problems between the contacting surfaces.

The object of the present invention is to eliminate the problems indicated above. The invention, as characterized by the claims, solves problems of leaktightness by constructing a butterfly valve such as to ensure that it is perfect and durable over time, in such a way that no contamination occurs at all, either inside the valve, that is between the upper part and the lower part thereof when the disc is in the closed position, or between the valve interior and the external environment, even when the valve is connected to machinery upstream and downstream.

The invention is described in greater detail below, with the aid of the drawings, which show an example of an embodiment thereof which is in no way intended to imply any limitation.

Fig. 1 shows a cross section through the butterfly valve, illustrating the body (1), the disc or butterfly (2), the pivots (2') and (2"), the seal (3), the bearing (4) of the actuating spindle (5) and the lever (6) - parts which reappear in Fig. 2, which shows the butterfly valve viewed from above.

Fig. 3 is a view of the actuating spindle (5) showing the end (5') by which it is coupled to the pivot (2'), which end (5') reappears in Fig. 4 seen from the front.
Fig. 5 shows the pivot (2') in two views.

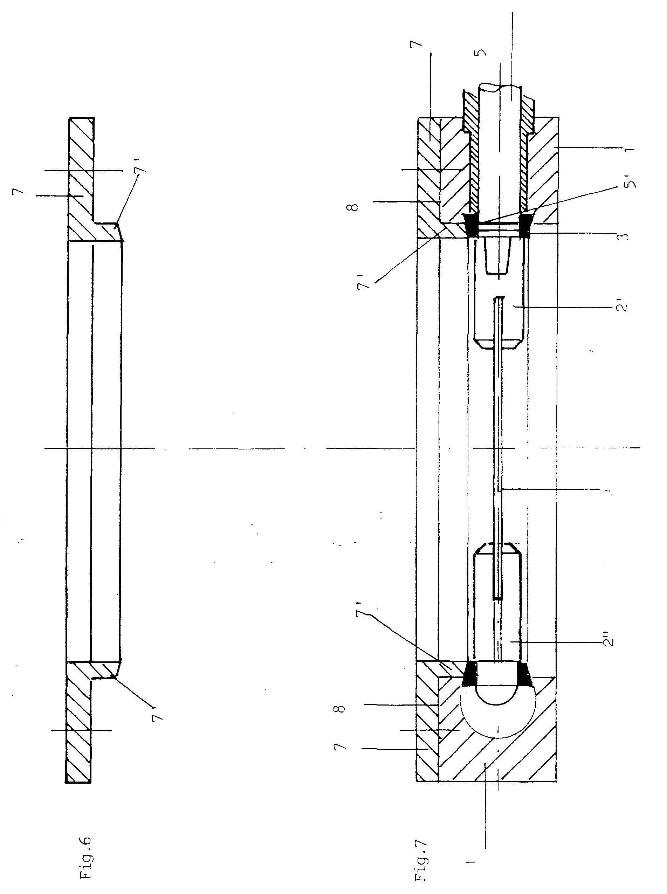

Fig. 6 shows the flange (7) for connecting the valve to the external machinery, and Fig. 7 the flange (7) coupled to the valve.

Assembling the valve is known and in itself is obvious. Specifically, once the two pivots (2') and (2") have been connected to the disc (2), for example by welding, they are housed in the seal (3).

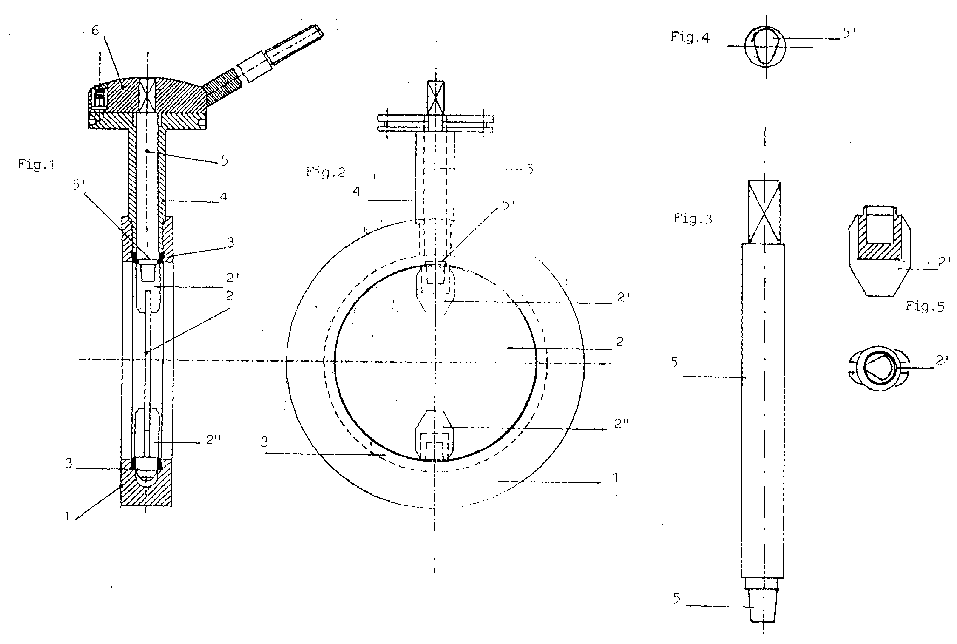

It is important to point out that in order to prevent contamination from or to the external environment, the coupling between the spindle (5) and the pivot (2') takes place inside the seal (3), as evidenced by the plane of contact (5') in Figures 1, 2 and 7, and that the pivot (2") is embedded in the seal (3) and is not in direct contact with the body (1). This is to compensate for wear to the spindle (5) - pivot (2') coupling, as will be described later in more detail.

There is further contribution to preventing potential contamination between the external environment and the internal environment of the valve, in the case of a valve whose body is made in one piece, in that its body (1) is made in one piece with the bearing (4) of the spindle (5), connected, for example, to the body (1) by welding.

The description of the invention now turns to the innovative details and the advantages procured thereby.

With reference to the accompanying drawings, which show a possible embodiment of the invention, it should be pointed out that, during manufacture, the two pivots (2') and (2") are connected rigidly, by welding, for example, to the disc (2) to form a single body. Although there is no particular feature to the pivot (2"), other than finding suitable housing in the seal (3) in which it floats, the pivot (2') on the other hand must have a cavity such as to allow it to be coupled to the end of the spindle (5) which is a frustum of a cone with an irregular base, as shown in Figs. 3 and 4.

The base with the irregular outline of the frustum of a cone, of which one possible embodiment is proposed in the accompanying figures, has the precise purpose of acting as a key for the exact positioning of the lever (6) with respect to the position adopted by the disc (2), the lever being joined in a fixed manner to the spindle, e.g. by welding operations.

In this way the operator, during the assembly operations, cannot possibly make a mistake in the spindle-disc coupling, even if the valve is enclosed between two machines and the disc is therefore out of sight.

The frustoconical shape of the end of the spindle (5), and consequently its housing in the pivot (2'), cancels out the effects of the wear that takes place over time between spindle and pivot - effects which would lead, if not corrected, to shear slippage between the two coupled parts, spindle and pivot, causing uncertainties in the closure, and hence sealing, of the valve.

This is because the spindle (5) is loaded axially by the lever (6), or other control member, and is held in balance by the reaction of the seal (3) on the pivot (2"). In view of this, it is obvious that the effect of wear, which would lead to shear slippage of the surfaces in contact with each other, is continuously cancelled out by the advancing of the end of the spindle (5) into the housing of the pivot, its advance being allowed by the conical form of the surfaces in contact with each other. Additionally, the freedom of the pivot (2") to float in the seal (3) means that the disc (2) centres itself automatically when closing, the result being a constant and uniform pressure over time around the entire circumference.

It will be obvious that, with an embodiment such as this, the disc can be rapidly stripped from the valve body for cleaning operations: all that is required is to detach the lever (6) from the bearing (4) of the spindle (5), extract the spindle (5) (an operation facilitated by the conical form of the surfaces in contact with each other) and then proceed with the extraction of the disc (2), made possible by the elasticity of the seal (3) because, once the spindle (5) is withdrawn, the two pivots (2') and (2") remain in contact with the seal (3) only.

Lastly, as regards the maintenance of the requisite sterile conditions, contamination is prevented between the environments inside and outside the valve, by the fact that the area of the join between the spindle (5) and the pivot (2') is inside the body of the seal (3). By contrast, as far as connecting the valve to external machinery is concerned, the problem is solved by providing the valve with two flanges (7), one on top and one below, which are fixed to the valve by screws, bolts or another known system, their configuration being such as to come into contact, via the projections (7') into the valve, with the seal (3) of rubbery material, thereby inhibiting any external contact via the contact surfaces (8) between the valve and the flanges (7).

## Claims

1. Arrangements for the durable leaktightness of a butterfly valve against potential contamination, the valve being easy to remove even if constructed with a one-piece body, the distribution device being constructed with a disc rotatable through 90° and capable of being moved from a horizontal closed position to a vertical open position by the external actuation of a spindle (5) connected to the disc, disc (2) leaktightness being ensured in the closed position by a seal (3) made of a rubbery material, the arrangements being **characterized in that** the coupling of the valve to external machines mounted upstream or downstream of it takes place by means of a flange (7) that compresses the seal (3) by means of the projection (7').

2. Arrangements for the durable leaktightness of a butterfly valve against potential contamination, the valve being easy to remove even if constructed with a one-piece body, the distribution device being constructed with a disc rotatable through 90° and capable of being moved from a horizontal closed position to a vertical open position by the external actuation of a spindle (5) connected to the disc, disc (2) leaktightness being ensured in the closed position by a seal (3) made of a rubbery material, and the control spindle (5) being separable from the disc (2), the arrangements being **characterized in that** the end of the spindle (5) is a frustum of a cone with a cross section of irregular outline, and **in that** it is housed in a similar cavity in the pivot (2') connecting it to the disc (2).

3. Arrangements according to Claim 2, **characterized in that** the connection between the spindle (5) and the pivot (2') that is integral with the disc (2) takes place inside the seal (3) of rubbery material.

4. Arrangements according to Claim 2, **characterized in that** the pivot (2") integral with the disc (2) is embedded in the seal (3) of rubbery material.

5. The said arrangements as described in the description and illustrated in the accompanying figures.
